# FASCICULE DE BREVET EUROPEEN

(11) **EP 3 558 762 B1**
(45) Date de publication et mention de la délivrance du brevet: **21.04.2021**
(21) Numéro de dépôt: 17807895.2
(22) Date de dépôt: 06.12.2017
(51) Int. Cl.: B60S 1/38, B60S 1/52

(54) **CONNECTEUR HYDRAULIQUE, BALAI D'ESSUYAGE EQUIPE D'UN TEL CONNECTEUR HYDRAULIQUE, PROCEDE D'ASSEMBLAGE ET PROCEDE DE FABRICATION**
HYDRAULIKVERBINDER, MIT SOLCH EINEM HYDRAULIKVERBINDER AUSGESTATTETER SCHEIBENWISCHER, ANORDNUNGSVERFAHREN UND HERSTELLUNGSVERFAHREN
HYDRAULIC CONNECTOR, WINDSHIELD WIPER EQUIPPED WITH SUCH A HYDRAULIC CONNECTOR, ASSEMBLY METHOD AND MANUFACTURING METHOD

(30) Priorité: 21.12.2016 FR 1663020
(43) Date de publication de la demande: 30.10.2019
(73) Titulaire: Valeo Systèmes d'Essuyage, 78322 Le Mesnil Saint Denis (FR)
(72) Inventeur: CAILLOT, Gérald, 78322 Le Mesnil Saint Denis (FR); IZABEL, Vincent, 78322 Le Mesnil Saint Denis (FR); JARASSON, Jean-Michel, 78322 Le Mesnil Saint Denis (FR)
(74) Mandataire: Valeo Visibility
(86) Numéro de dépôt international: PCT/EP2017/081751
(87) Numéro de publication internationale: WO 2018/114345

(56) Documents cités:
- EP-A1- 2 671 766
- DE-A1-102004 056 835
- DE-A1-102011 050 104
- FR-A1- 3 023 524

## Description

La présente invention se rapporte au domaine des dispositifs d'essuie-glace utilisés pour le nettoyage et/ou le dégivrage d'une surface vitrée d'un véhicule automobile. L'invention a pour objet un connecteur hydraulique qui est constitutif d'un balai d'essuyage, un balai d'essuyage pourvu d'un tel connecteur hydraulique, un procédé d'assemblage d'un tel connecteur hydraulique et un procédé de fabrication d'un tel connecteur hydraulique.

Les systèmes d'essuyage, couramment dénommés essuie-glace, pour véhicule automobile sont conçus pour nettoyer et/ou dégivrer, par balayage, le pare-brise d'un véhicule automobile. De tels systèmes comportent généralement un bras d'entraînement qui effectue un mouvement de va-et-vient angulaire autour d'un axe de rotation et relié à une source en fluide de nettoyage et/ou de dégivrage, ainsi qu'un balai d'essuyage connecté au bras d'entraînement.

Les essuie-glaces sont équipés de dispositifs d'amenée d'un fluide de nettoyage et/ou dégivrage acheminé depuis un réservoir situé sur le véhicule et pulvérisé en direction du pare-brise par des buses situées soit autour du pare-brise, soit directement sur les balais. Ce dernier agencement, où le fluide est éjecté directement du balai d'essuyage et pulvérisé sur le pare-brise, assure une meilleure distribution du fluide et augmente la précision et l'efficacité du nettoyage et/ou dégivrage. Dans ce cas, un connecteur hydraulique est assemblé au balai d'essuyage lequel est pourvu d'au moins une rampe d'acheminement et de projection du fluide de nettoyage et/ou de dégivrage. Le connecteur hydraulique comporte au moins un raccord d'entrée connecté à une arrivée du fluide, au moins un raccord de sortie connecté à la rampe et un chemin interne pour le cheminement du fluide depuis le raccord d'entrée jusqu'au raccord de sortie. Dans l'art antérieur, le branchement entre le connecteur hydraulique et le balai d'essuyage peut être source de fuites lorsque la pression augmente dans le circuit de fluide. En particulier, la connexion lisse, entre le raccord de sortie du connecteur hydraulique et la rampe de projection de fluide de nettoyage et/ou de dégivrage, ne permet pas de garantir un niveau d'étanchéité suffisant en cas de surpression EP-A-102011050104 montre un connecteur selon le préambule de la revendication 1.

L'invention a pour objectif d'apporter une solution à ce problème en proposant un connecteur hydraulique au sein duquel le raccord de sortie présente une structure alternative apte à assurer une connexion fiable et étanche avec la rampe de projection de fluide de nettoyage et/ou de dégivrage, de manière à éviter toute fuite au niveau du balai d'essuyage, notamment en cas de surpression.

L'invention a ainsi pour objet un connecteur hydraulique destiné à être assemblé à un balai d'essuyage d'un véhicule, notamment automobile, le balai d'essuyage étant pourvu d'au moins une rampe de projection de fluide, notamment de nettoyage et/ou de dégivrage, qui s'étend le long du balai d'essuyage. Le connecteur hydraulique comprend au moins un raccord d'entrée apte à être connecté à une arrivée du fluide et au moins un tube apte à être connecté à un conduit délimité par ladite au moins une rampe, le connecteur hydraulique comprenant au moins un raccord de sortie et un dispositif d'étanchéité avec la rampe, caractérisé en ce que le raccord de sortie rapporté sur le tube du connecteur hydraulique comporte une première portion cylindrique amont destiné à être logée dans le tube du connecteur hydraulique, une butée d'arrêt et une seconde portion cylindrique aval destinée à être logée dans le conduit de la rampe de projection et comportant le dispositif d'étanchéité consistant en une collerette de diamètre externe supérieur au diamètre externe du raccord de sortie.

Le connecteur hydraulique, de forme sensiblement parallélépipédique, comporte, le long d'une de ses plus grandes faces, au moins un tube qui s'étend selon un axe longitudinal X jusqu'à l'intersection avec une autre face perpendiculaire audit axe X. Le raccord de sortie, qu'il soit rapporté ou intégré au tube du connecteur hydraulique, est un élément tubulaire cylindrique qui s'étend selon un axe longitudinal X'. Avantageusement, le raccord de sortie est connecté au tube du connecteur hydraulique par une première extrémité amont et est connecté au conduit de la rampe de projection par une seconde extrémité aval. En position d'insertion, le tube du connecteur hydraulique, le raccord de sortie et le conduit de la rampe de projection sont alignés, de manière à ce que les axes longitudinaux X et X' se confondent.

Le connecteur hydraulique comporte avantageusement l'une quelconque au moins des caractéristiques suivantes, prises seules ou en combinaison :
- selon l'invention, le dispositif d'étanchéité du raccord de sortie prend la fore d'une collerette de diamètre externe supérieur au diamètre externe du raccord de sortie,
- dans un mode de réalisation du connecteur hydraulique selon l'invention, le raccord de sortie est un élément tubulaire cylindrique spécifique obtenu par moulage d'un matériau synthétique, par exemple thermoplastique. Ledit raccord de sortie s'étend selon un axe longitudinal X' et est rapporté sur le tube du connecteur hydraulique.
- selon l'invention, le raccord de sortie comporte une première portion cylindrique amont destinée à être logée dans le tube du connecteur hydraulique, une butée d'arrêt s'étendant dans un plan transversal, avantageusement perpendiculaire, à l'axe longitudinal X' du raccord de sortie et une seconde portion cylindrique aval, destinée à être logée dans le conduit de la rampe de projection.
- selon l'invention, la seconde portion comprend une collerette constituant le dispositif d'étanchéité.

Dans cette configuration, le diamètre de la butée d'arrêt est supérieur aux diamètres des première et/ou seconde portions cylindriques. La butée d'arrêt peut éventuellement limiter l'insertion de la première portion cylindrique du raccord de sortie dans le tube du connecteur, et/ou l'insertion de la seconde portion dans le conduit de la rampe de projection.
- le diamètre externe de la première portion cylindrique du raccord de sortie est inférieur au diamètre interne du tube du connecteur dans lequel il se loge tandis que le diamètre externe de la seconde portion est supérieur au diamètre interne du conduit de la rampe dans lequel il se loge.
- l'extrémité libre de la seconde portion cylindrique est avantageusement de forme conique jusqu'à la collerette, de manière à faciliter l'insertion de la seconde portion cylindrique du raccord de sortie dans le conduit de la rampe de projection. Lorsque le raccord de sortie se loge dans le conduit de la rampe de projection de fluide, la collerette, qui forme une arête vive, vient au contact de la paroi interne du conduit de la rampe et améliore l'étanchéité de la connexion du raccord de sortie avec la rampe.
- dans un autre mode de réalisation du connecteur hydraulique non revendiqué, le raccord de sortie est intégré au tube du connecteur hydraulique et prolonge ledit tube au-delà de la face du connecteur perpendiculaire à l'axe longitudinal X du tube. Dans cette configuration, l'axe longitudinal X' du raccord de sortie se superpose à l'axe longitudinal X du tube. Le connecteur hydraulique, pourvu du raccord de sortie intégré, constitue un corps monobloc obtenu par moulage d'un matériau synthétique.

Dans une première variante de ce mode de réalisation, le dispositif d'étanchéité est obtenu par déformation à chaud de l'extrémité libre du raccord de sortie, cette dernière étant alors lisse.

Le dispositif d'étanchéité est de forme conique, de manière à faciliter l'insertion du raccord de sortie dans le conduit de la rampe de projection.

Le dispositif d'étanchéité, limité en amont par une collerette, présente, de l'amont vers l'aval, un diamètre externe variant selon une pente descendante. Le diamètre externe de la collerette est supérieur au diamètre externe du raccord de sortie, de manière à former une arête vive ou arrondie apte à venir au contact de la paroi interne du conduit de la rampe pour améliorer l'étanchéité de la connexion avec le conduit de la rampe de projection. L'accroissement de diamètre crée alors une contrainte contre la paroi interne du conduit de la rampe.

Dans une seconde variante de ce mode de réalisation, le dispositif d'étanchéité est obtenu par déformation à chaud de l'extrémité libre du raccord de sortie, cette dernière étant préalablement lisse, de préférence par un procédé faisant appel à une sonotrode à ultrasons.

Le dispositif d'étanchéité est limité en amont par une collerette en forme de dent qui s'évase autour du raccord de sortie.

La dent est rigide. Une telle rigidité améliore l'étanchéité qui résulte de l'invention. Cette dent est entourée par une rainure annulaire agencée entre la dent et le raccord de sortie. La rainure est le résultat de la matière repoussée pour former la dent. Par la suite, lorsque le raccord de sortie est logé dans le conduit de la rampe de projection de fluide, l'étanchéité de la connexion est assurée par pénétration de la dent dans la paroi délimitant le conduit de la rampe, une certaine souplesse de la dent étant obtenue par la présence de la rainure.

Selon une autre caractéristique, le connecteur hydraulique selon l'invention est conforme au règlement ECE N° 1008/2010 du 9 novembre 2010. Il présente ainsi des caractéristiques qui le rendent apte aux différents tests qui résultent de cette norme.

L'invention a aussi pour autre objet un balai d'essuyage pourvu d'au moins une rampe de projection de fluide et comprenant un connecteur hydraulique selon l'invention raccordé à ladite rampe par son raccord de sortie.

Selon une caractéristique avantageuse, la rampe de projection de fluide du balai d'essuyage est constituée d'un matériau moins rigide que le matériau constitutif du raccord de sortie et donc du dispositif d'étanchéité. A titre d'exemple, la rampe de projection est réalisée en élastomères thermoplastiques vulcanisés ou non-vulcanisés ou en caoutchouc éthylène-propylène-diène monomère, de dureté comprise entre 70 et 80 shores. La rampe de projection est ainsi apte à se déformer sous l'effet de l'insertion du raccord de sortie équipé du dispositif d'étanchéité, dans son conduit. Par la suite, lorsque le raccord de sortie est logé dans le conduit de la rampe de projection de fluide, l'étanchéité de la connexion est assurée par pénétration de la collerette dans la paroi délimitant le conduit de la rampe.

Selon une caractéristique, la rampe de projection de fluide du balai d'essuyage comprend au moins une rangée de trous qui s'étend le long du balai d'essuyage et par lesquels le fluide est apte à être projeté sur une surface vitrée du véhicule, de préférence un pare-brise.

L'invention a aussi pour autre objet un système d'essuyage comprenant un bras d'entrainement et un balai d'essuyage selon l'un quelconque des aspects décrits dans le présent document.

L'invention a aussi pour autre objet un procédé d'assemblage d'un connecteur hydraulique selon l'invention raccordé à la rampe de projection de fluide par son raccord de sortie rapporté au tube du connecteur hydraulique, au cours duquel on insère la première portion du raccord de sortie dans le tube du connecteur hydraulique, éventuellement jusqu'à la butée d'arrêt du raccord de sortie, puis on étanchéifie la connexion, par montage à force du raccord de sortie dans le tube du connecteur hydraulique ou par soudure ultrason du raccord de sortie au tube du connecteur hydraulique.

La publication a aussi pour autre objet un procédé de fabrication d'un connecteur hydraulique non revendiqué raccordé à la rampe de projection de fluide par son raccord de sortie intégré dans au moins un tube, au cours duquel on fabrique le connecteur hydraulique muni d'un raccord de sortie et dont l'extrémité libre du raccord de sortie est lisse, puis on déforme ladite extrémité libre pour former un dispositif d'étanchéité.

Selon des caractéristiques complémentaires, l'étape de déformation de l'extrémité libre du raccord de sortie est réalisée par déformation à chaud de manière à obtenir un dispositif d'étanchéité conique comportant une collerette en forme d'arête vive ou par déformation par ultrasons, par le biais d'une sonotrode, de manière à obtenir un dispositif d'étanchéité comportant une collerette en forme de dent rigide évasée autour de la portion cylindrique du raccord de sortie et entourée d'une rainure annulaire agencée autour de la portion cylindrique du raccord de sortie.

D'autres caractéristiques et avantages de l'invention apparaitront plus clairement à la lecture de la description détaillée des modes de réalisation de l'invention, donnée ci-après à titre d'exemples illustratifs et non limitatifs et s'appuyant sur les figures annexées, dans lesquelles on a illustré le connecteur hydraulique destiné à être assemblé à un balai d'essuyage d'un véhicule automobile selon l'invention, et parmi lesquelles :
- la figure 1 est une vue en perspective éclatée d'un connecteur hydraulique selon un premier mode de réalisation de l'invention et d'un raccord de sortie destiné à être rapporté sur un tube du connecteur hydraulique,
- la figure 2 est une vue en perspective d'un connecteur hydraulique selon un second mode de réalisation non revendiqué et d'un raccord de sortie intégré à un tube du connecteur hydraulique,
- les figures 3a et 3b sont des vues de détail, en coupe longitudinale, du raccord de sortie de la figure 2 intégré à un tube du connecteur hydraulique selon le second mode de réalisation non revendiqué, respectivement avant et après la déformation à chaud de l'extrémité libre du raccord de sortie pour obtenir le dispositif d'étanchéité,
- les figures 4a et 4b sont des vues de détail, en coupe longitudinale, du raccord de sortie intégré à un tube du connecteur hydraulique selon le second mode de réalisation non revendiqué, respectivement avant et après la déformation par ultrasons de l'extrémité libre du raccord de sortie pour obtenir le dispositif d'étanchéité.

Il est nécessaire de noter que si les figures exposent l'invention de manière détaillée pour sa mise en œuvre, elles peuvent également servir à mieux définir l'invention le cas échéant. On comprendra également que les modes de réalisation de l'invention illustrés par les figures sont données à titre d'exemple non limitatif. Par conséquent, d'autres configurations du connecteur hydraulique selon l'invention peuvent être réalisées, notamment par variations de l'agencement et du dimensionnement du raccord de sortie et du dispositif d'étanchéité.

Sur les figures, les dénominations amont et aval, se réfèrent à l'orientation des éléments constitutifs d'un connecteur hydraulique 1 selon l'invention et, en particulier, selon les directions déterminées par l'axe longitudinal X d'un tube 2 du connecteur hydraulique 1 et par l'axe longitudinale X' d'un raccord de sortie 5, 13. Lorsque le raccord de sortie 5, 13 est inséré dans le tube, les deux axes X et X' se confondent. On comprend que la dénomination amont se réfère à tout élément situé en direction de la face 4 du connecteur hydraulique 1, perpendiculaire à l'axe longitudinal X, tandis que la dénomination aval se réfère à tout élément situé en direction de l'extrémité libre 12, 14 du raccord de sortie 5, 13 comprenant un dispositif d'étanchéité 10, 15, 15'.

Le connecteur hydraulique 1 comprend au moins un raccord d'entrée 21 apte à être relié à une arrivée en fluide de nettoyage et/ou dégivrage. Ce raccord d'entrée 21 est en communication fluidique avec le tube 2 par un circuit interne au connecteur hydraulique 1.

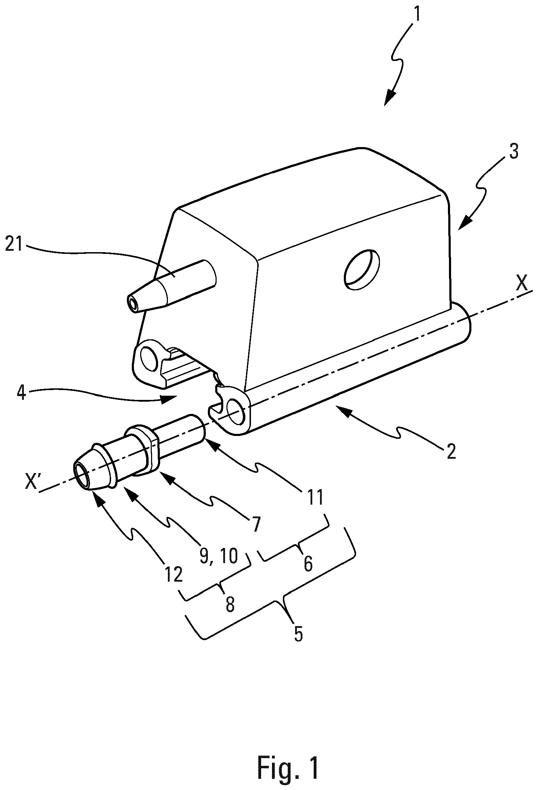

La figure 1 illustre le connecteur hydraulique 1 selon un premier mode de réalisation de l'invention où le raccord de sortie 5 est un élément tubulaire cylindrique distinct du connecteur hydraulique 1 et rapporté au tube 2 de ce même connecteur hydraulique 1. Le tube 2 s'étend selon son axe longitudinal X, le long d'au moins une des plus grandes faces 3 du connecteur hydraulique 1 et jusqu'à l'intersection avec le plan défini par au moins une face 4 qui s'étend perpendiculairement à l'axe longitudinal X.

Le raccord de sortie 5 s'étend selon un axe longitudinal X' et est destiné à être connecté au tube 2 du connecteur hydraulique 1 par une première extrémité 11 amont et à être connectée au conduit de la rampe de projection (non représenté) par une seconde extrémité libre 12 aval. En position d'insertion, le tube 2 du connecteur hydraulique 1, le raccord de sortie 5 et le conduit de la rampe de projection sont alignés, de manière à ce que les axes longitudinaux X et X' se confondent. De l'amont vers l'aval, le raccord de sortie 5 comporte une première portion 6 cylindrique destinée à être logée dans le tube 2 du connecteur hydraulique 1, une butée d'arrêt 7 s'étendant dans un plan transversal et par exemple perpendiculaire à l'axe longitudinal X' du raccord de sortie 5 et une seconde portion 8 cylindrique, destinée à être logée dans le conduit de la rampe de projection.

La seconde portion 8 comprend une collerette 9 constituant le dispositif d'étanchéité 10. Dans cette configuration, le diamètre de la butée d'arrêt 7 est supérieur aux diamètres des première et/ou seconde portions 6, 8 cylindriques. La butée d'arrêt 7 peut éventuellement limiter, d'une part, l'insertion de la première portion 6 cylindrique du raccord de sortie 5 dans le tube 2 du connecteur 1, et, d'autre part, l'insertion de la seconde portion 8 dans le conduit de la rampe de projection.

Dans ce mode de réalisation, le diamètre externe de la première portion 6 cylindrique du raccord de sortie est inférieur au diamètre interne du tube 2 du connecteur 1 dans lequel il se loge, tandis que le diamètre externe de la seconde portion 8 est supérieur au diamètre interne du conduit de la rampe dans lequel il se loge. L'extrémité libre 12 de la seconde portion 8 est avantageusement de forme conique jusqu'à la collerette 9, de manière à faciliter l'insertion de la seconde portion 8 cylindrique du raccord de sortie 5 dans le conduit de la rampe de projection.

Le raccord de sortie 5, pour pouvoir s'insérer dans le conduit délimité par la rampe de projection, doit être constitué d'un matériau plus rigide que le matériau caoutchouc ou similaire de ladite rampe. Dans cette configuration, la rampe de projection se déforme sous l'effet de l'insertion du raccord de sortie 5 dans son conduit. Lorsque le raccord de sortie 5 est logé dans le conduit de la rampe de projection de fluide, l'étanchéité de la connexion est assurée par l'arête vive ou arrondie formée par la collerette 9 du dispositif d'étanchéité 10 qui déforme la paroi interne du conduit. Ce premier mode de réalisation présente l'avantage de simplifier la structure du connecteur hydraulique 1 en proposant de réaliser un raccord de sortie 5 distinct de la pièce monobloc du connecteur 1. Le raccord de sortie 5 comportant la collerette 9 constitue alors une pièce plus simple obtenue par moulage d'un matériau synthétique.

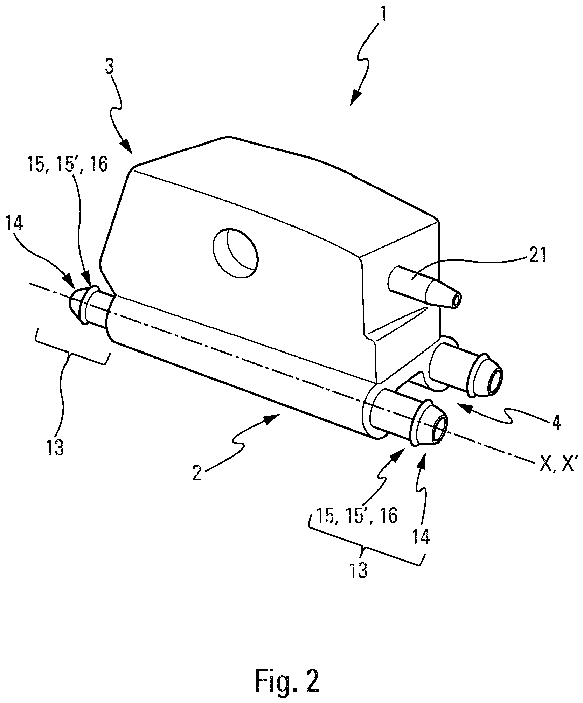

La figure 2 illustre un connecteur hydraulique 1 selon un second mode de réalisation non revendiqué où le raccord de sortie 13 est intégré à un tube 2 du connecteur hydraulique 1. Dans cette configuration, l'axe longitudinal X' du raccord de sortie 13 est confondu avec l'axe longitudinal X du tube 2. Le raccord de sortie 13 prolonge le tube 2 en aval de la face 4 du connecteur hydraulique 1 perpendiculaire à l'axe longitudinal X. Selon l'invention, le raccord de sortie 13 est destiné à être inséré depuis son extrémité libre 14 dans le conduit de la rampe de projection jusqu'à, par exemple, venir en butée avec la face 4 du connecteur hydraulique 1. Dans une première variante du second mode de réalisation, l'extrémité libre 14 est déformée de manière à constituer un dispositif d'étanchéité 15, limité en amont par une collerette 16 et avantageusement de forme conique. Selon ce second mode de réalisation non revendiqué, connecteur hydraulique 1 et raccord de sortie 13 pourvu de l'extrémité lisse sont monobloc est issus d'une même étape de moulage.

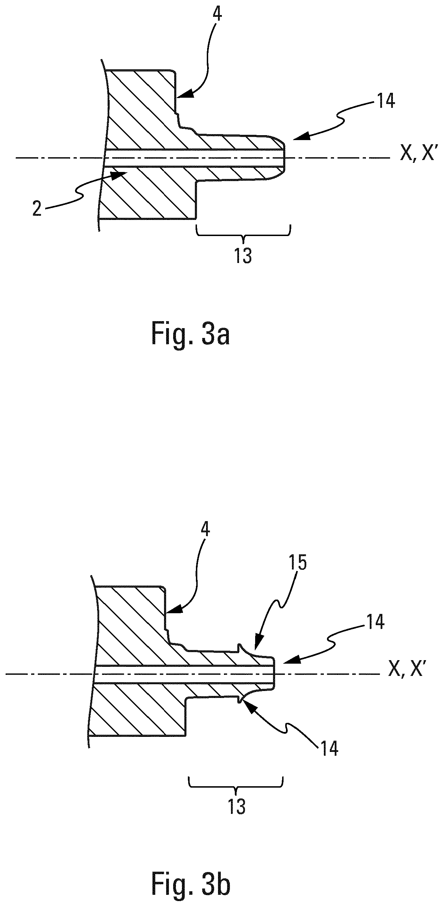

Les figures 3a et 3b illustrent le second mode de réalisation non revendiqué présenté à la figure 2, selon lequel le raccord de sortie 13 est intégré au tube 2 du connecteur hydraulique 1. Plus particulièrement, la figure 3a illustre le raccord de sortie 13 avant déformation de son extrémité libre 14, quand celle-ci présente une surface périphérique externe lisse. La figure 3b détaille le dispositif d'étanchéité 15 obtenu par déformation à chaud de l'extrémité libre 14 du raccord de sortie 13.

Le dispositif d'étanchéité 15 comporte ici une collerette 16 dont le diamètre externe est supérieur au diamètre externe du raccord de sortie 13. Ladite collerette 16 forme une arête vive apte à venir au contact de la paroi interne du conduit de la rampe, pour améliorer l'étanchéité de la connexion du raccord de sortie 13 avec le conduit de la rampe de projection.

Le raccord de sortie 13, pour faciliter son insertion dans le conduit délimité par la rampe de projection, doit être constitué d'un matériau plus rigide que le matériau caoutchouc ou similaire de la rampe. La rampe de projection se déforme sous l'effet de l'insertion du raccord de sortie 13, en particulier de la collerette 16, dans son conduit.

La collerette 16 est formée postérieurement à l'étape de moulage du connecteur hydraulique 1 muni de son raccord de sortie 13 intégré. Le caractère lisse du raccord de sortie 13 préalablement à sa déformation, facilite le moulage du connecteur hydraulique. En effet, la forme complexe de la collerette imposerait un moule de conception complexe, où les angles de dépouille sont difficiles à gérer, se traduisant in fine par un moule d'un coût élevé, en tout cas d'un coût inadapté aux contraintes financières du milieu automobile.

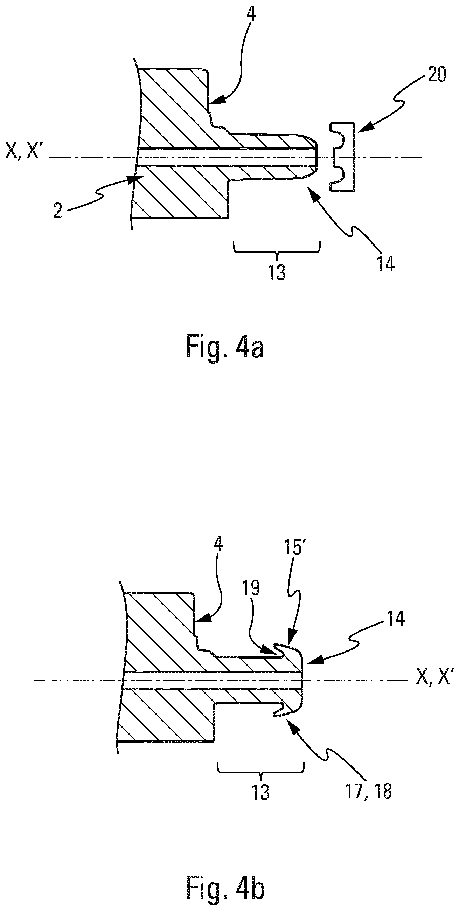

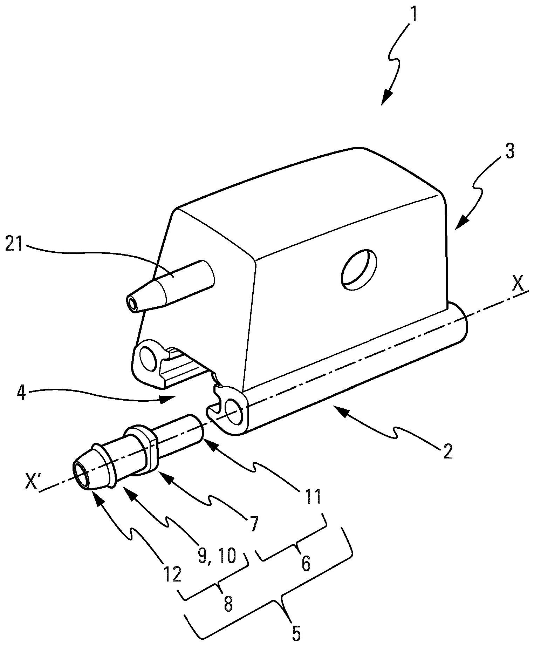

Les figures 4a et 4b illustrent le raccord de sortie 13 intégré à un tube 2 du connecteur hydraulique 1 selon une variante du second mode de réalisation non revendiqué où le raccord de sortie 13 est intégré à un tube 2 du connecteur hydraulique 1. Comme précédemment illustré sur la figure 2, l'axe longitudinal X' du raccord de sortie 13 est confondu avec l'axe longitudinal X du tube 2 et le raccord de sortie 13 prolonge le tube 2 en aval de la face 4 du connecteur hydraulique 1, perpendiculairement à l'axe longitudinal X.

Plus particulièrement, la figure 4a illustre le raccord de sortie 13 avant déformation par ultrasons de son extrémité libre 14, en particulier par action d'une sonotrode 20. Comme pour la première variante, l'extrémité libre 14 présente alors une paroi périphérique externe lisse.

La figure 4b détaille le dispositif d'étanchéité 15' obtenu après déformation. Le dispositif d'étanchéité 15' est limité en amont par une collerette 17 en forme de dent 18 qui s'évase autour du raccord de sortie 13. La dent 18 est particulièrement rigide, de manière à déformer la paroi interne du conduit de la rampe. La dent 18 est entourée d'une rainure annulaire 19 agencée entre la dent 18 et le raccord de sortie 13. Par la suite, lorsque le raccord de sortie 13 est logé dans le conduit de la rampe de projection de fluide, l'étanchéité de la connexion est assurée par pénétration de la dent 18 dans la paroi interne délimitant le conduit de la rampe.

L'invention a aussi pour autre objet un balai d'essuyage pourvu d'au moins une rampe de projection de fluide et comprenant un connecteur hydraulique 1 selon l'invention raccordé à ladite rampe par son raccord de sortie 5, 13. On comprend que, conformément à l'ensemble des éléments décrits dans les divers modes de réalisation du raccord de sortie 5 ou 13, la rampe de projection de fluide du balai d'essuyage doit être constituée d'un matériau moins rigide que le matériau constitutif du raccord de sortie 5, 13, du dispositif d'étanchéité 10, 15, 15' et de leurs éléments constitutifs, notamment de la collerette 9, 16, 17. La rampe de projection est ainsi apte à se déformer sous l'effet de l'insertion, dans son conduit, du raccord de sortie 5, 13 pourvu d'un dispositif d'étanchéité 10, 15, 15'. Par la suite, lorsque le raccord de sortie 5, 13 est logé dans le conduit de la rampe de projection de fluide, l'étanchéité de la connexion est assurée par pénétration de la collerette 9, 16, 17, éventuellement de la dent 18, dans la paroi délimitant le conduit de la rampe.

On notera que la rampe de projection de fluide du balai d'essuyage peut être pourvue d'au moins une rangée de trous qui s'étend le long du balai d'essuyage et par lesquels le fluide de nettoyage et/ou de dégivrage est apte à être projeté sur un pare-brise d'un véhicule automobile. Un tel balai d'essuyage peut comporter une unique rampe de projection qui s'étend sur un côté du balai d'essuyage et le long de celui-ci. Dans ce cas, le connecteur hydraulique 1 comprend seulement deux raccords de sortie ménagés sur un même côté du connecteur hydraulique.

On comprend également que le balai d'essuyage peut comprendre deux rampes de projection, chacune ménagée sur un côté du balai d'essuyage en s'étendant le long de celui-ci. Dans une telle situation, le connecteur hydraulique 1 comprend quatre raccords de sortie ménagés aux quatre coins du connecteur hydraulique.

Au connecteur hydraulique 1 pourvu d'un raccord de sortie 5 rapporté sur le tube 2 tel que prévu par le premier mode de réalisation de l'invention, on peut associer un procédé d'assemblage comprenant au moins :
- une étape d'insertion du raccord de sortie 5, en particulier de sa première portion 6, dans le tube 2 du connecteur hydraulique 1, éventuellement jusqu'à la butée d'arrêt 7 du raccord de sortie 5. On comprend que, préalablement à l'étape d'insertion, le raccord de sortie 5 est fabriqué par moulage, indépendamment du connecteur hydraulique 1,
- une étape d'étanchéification de la connexion entre la première portion 6 du raccord de sortie 5 et le tube 2 du connecteur hydraulique 1. La connexion étanche peut être obtenue par montage à force de la première portion 6 du raccord de sortie 5 dans le tube 2 du connecteur hydraulique 1, par soudure ultrasons ou par collage de ladite première portion 6 du raccord de sortie 5 au tube 2 du connecteur hydraulique 1.

Pour un montage à force, le raccord de sortie 5, en particulier la première portion 6, peut être constitué(e) d'un matériau synthétique différent du matériau constitutif du connecteur hydraulique 1, en particulier du tube 2. En revanche, lorsque la première portion 6 du raccord de sortie 5 est soudée par ultrasons au tube 2 du connecteur hydraulique 1, le raccord de sortie 5, en particulier la première portion 6, peut être constitué(e) d'un matériau synthétique, de préférence chargé, identique au matériau constitutif du connecteur hydraulique 1, en particulier du tube 2.

Au connecteur hydraulique 1 pourvu d'un raccord de sortie 13 intégré au tube 2 tel que prévue par le second mode de réalisation non revendiqué, on peut associer un procédé de fabrication dudit connecteur hydraulique 1 comprenant au moins :
- une étape de fabrication par moulage du connecteur hydraulique 1 comprenant le raccord de sortie 13 pourvu d'une extrémité libre 14 lisse, l'ensemble constituant un corps monobloc unique,
- une étape de déformation de l'extrémité libre 14 du raccord de sortie 13 en vue d'obtenir un dispositif d'étanchéité 15, 15'. Dans une première variante, la déformation à chaud de l'extrémité libre 14 lisse du raccord de sortie 13 permet d'obtenir le dispositif d'étanchéité 15 de forme conique et pourvu d'une collerette 16 en forme d'arête vive. Dans une seconde variante, la déformation de l'extrémité libre 14 lisse du raccord de sortie 13 par un procédé faisant appel à une sonotrode à ultrasons 20, permet d'obtenir le dispositif d'étanchéité 15' pourvu d'une collerette 17 en forme de dent 18 rigide et évasée autour du raccord de sortie 13. La dent 18 est entourée d'une rainure annulaire 19 agencée autour de la portion cylindrique du raccord de sortie 13.

La description qui précède explique clairement comment l'invention permet d'atteindre les objectifs qu'elle s'est fixée et notamment de proposer un connecteur hydraulique au sein duquel le raccord de sortie, pourvu d'un dispositif d'étanchéité, assure une connexion étanche avec le conduit de la rampe de projection de fluide de nettoyage et/ou de dégivrage dans lequel il est inséré. Cette structure alternative du connecteur hydraulique permet de limiter les fuites au niveau du balai d'essuyage et système d'essuyage qui le contient, notamment en cas de surpression et répond, de ce fait, aux exigences du règlement ECE N° 1008/2010 du 9 novembre 2010.

## Revendications

1. Connecteur hydraulique (1) destiné à être assemblé à un balai d'essuyage d'un véhicule pourvu d'au moins une rampe de projection de fluide le long du balai d'essuyage, le connecteur hydraulique (1) comprenant au moins un raccord d'entrée (21) apte à être connecté à une arrivée dudit fluide et au moins un tube (2) apte à être connecté à un conduit délimité par la rampe, le connecteur hydraulique (1) comprenant au moins un raccord de sortie (5, 13) et un dispositif d'étanchéité (10, 15, 15') avec la rampe, le dispositif d'étanchéité (10, 15, 15') étant constitutif du raccord de sortie (5) rapporté sur le tube (2), **caractérisé en ce que** le raccord de sortie (5) rapporté sur le tube (2) du connecteur hydraulique (1) comporte une première portion (6) cylindrique amont destinée à être logée dans le tube du connecteur hydraulique, une butée d'arrêt (7) et une seconde portion (8) cylindrique aval destinée à être logée dans le conduit de la rampe de projection et comportant le dispositif d'étanchéité (10) consistant en une collerette (9) de diamètre externe supérieur au diamètre externe du raccord de sortie (5).

2. Connecteur hydraulique (1) selon la revendication 1, **caractérisé en ce que** le diamètre de la butée d'arrêt (7) est supérieur aux diamètres des première et/ou seconde portions (6, 8) cylindriques.

3. Connecteur hydraulique (1) selon l'une quelconque des revendications 1 à 2, **caractérisé en ce que** le diamètre externe de la première portion (6) cylindrique du raccord de sortie (5) est inférieur au diamètre interne du tube (2) du connecteur (1).

4. Connecteur hydraulique (1) selon l'une quelconque des revendications 1 à 3, **caractérisé en ce que** l'extrémité libre (12) de la seconde portion (8) cylindrique est de forme conique.

5. Connecteur hydraulique (1) selon l'une quelconque des revendications 1 à 4, **caractérisé en ce qu'**il est conforme au règlement ECE N° 1008/2010 du 9 novembre 2010.

6. Balai d'essuyage pourvu d'au moins une rampe de projection de fluide et comprenant un connecteur hydraulique (1) selon l'une quelconque des revendications 1 à 5 raccordé à ladite rampe par son raccord de sortie (5, 13).

7. Balai d'essuyage selon la revendication 6, **caractérisé en ce que** la rampe de projection de fluide du balai d'essuyage comprend au moins une rangée de trous qui s'étend le long dudit balai et par lesquels le fluide est apte à être projeté sur une surface vitrée.

8. Procédé d'assemblage d'un connecteur hydraulique (1) selon l'une quelconque des revendications 1 à 5, au cours duquel on insère la première portion (6) du raccord de sortie (5) dans le tube (2) du connecteur hydraulique (1) puis on étanchéifie la connexion.

9. Procédé d'assemblage selon la revendication 8, **caractérisé en ce que** l'étanchéité est obtenue soit par montage à force du raccord de sortie (5) dans le tube (2) du connecteur hydraulique (1), soit par soudure ultrason du raccord de sortie (5) au tube (2) du connecteur hydraulique (1).

## Patentansprüche

1. Hydraulikverbinder (1), der dazu bestimmt ist, an einem Scheibenwischer eines Fahrzeugs, der über mindestens eine Fluidspritzrampe entlang des Scheibenwischers verfügt, montiert zu sein, wobei der Hydraulikverbinder (1) mindestens einen Eingangsanschluss (21), der fähig ist, mit einem Zulauf des Fluids verbunden zu sein, und mindestens ein Rohr (2), das fähig ist, mit einer durch die Rampe begrenzten Leitung verbunden zu sein, beinhaltet, wobei der Hydraulikverbinder (1) mindestens einen Ausgangsanschluss (5, 13) und eine Abdichtungsvorrichtung (10, 15, 15') zu der Rampe beinhaltet, wobei die Abdichtungsvorrichtung (10, 15, 15') einen Teil des an dem Rohr (2) angebrachten Ausgangsanschlusses (5) bildet, **dadurch gekennzeichnet, dass** der an dem Rohr (2) des Hydraulikverbinders (1) angebrachte Ausgangsanschluss (5) Folgendes umfasst: einen stromaufwärts gelegenen ersten zylindrischen Abschnitt (6), der dazu bestimmt ist, in dem Rohr des Hydraulikverbinders aufgenommen zu sein, einen Anschlag (7) und einen stromabwärts gelegenen zweiten zylindrischen Abschnitt (8), der dazu bestimmt ist, in der Leitung der Spritzrampe aufgenommen zu sein, und der die Abdichtungsvorrichtung (10) umfasst, welche aus einem Bund (9) besteht, dessen Außendurchmesser größer als der Außendurchmesser des Ausgangsanschlusses (5) ist.

2. Hydraulikverbinder (1) nach Anspruch 1, **dadurch gekennzeichnet, dass** der Durchmesser des Anschlags (7) größer als der Durchmesser des ersten und/oder des zweiten zylindrischen Abschnitts (6, 8) ist.

3. Hydraulikverbinder (1) nach einem der Ansprüche 1 bis 2, **dadurch gekennzeichnet, dass** der Außendurchmesser des ersten zylindrischen Abschnitts (6) des Ausgangsanschlusses (5) kleiner als der Innendurchmesser des Rohrs (2) des Verbinders (1) ist.

4. Hydraulikverbinder (1) nach einem der Ansprüche 1 bis 3, **dadurch gekennzeichnet, dass** das freie Ende (12) des zweiten zylindrischen Abschnitts (8) eine konische Form aufweist.

5. Hydraulikverbinder (1) nach einem der Ansprüche 1 bis 4, **dadurch gekennzeichnet, dass** er der ECE-Regelung Nr. 1008/2010 vom 9. November 2010 entspricht.

6. Scheibenwischer, der über mindestens eine Fluidspritzrampe verfügt und einen Hydraulikverbinder (1) nach einem der Ansprüche 1 bis 5 beinhaltet, der durch seinen Ausgangsanschluss (5, 13) mit der Rampe verbunden ist.

7. Scheibenwischer nach Anspruch 6, **dadurch gekennzeichnet, dass** die Fluidspritzrampe des Scheibenwischers mindestens eine Reihe Löcher beinhaltet, die sich entlang des Wischers erstreckt und durch die das Fluid auf eine Glasscheibe gespritzt werden kann.

8. Anordnungsverfahren für einen Hydraulikverbinder (1) nach einem der Ansprüche 1 bis 5, bei dem der erste Abschnitt (6) des Ausgangsanschlusses (5) in das Rohr (2) des Hydraulikverbinders (1) eingeführt wird und dann die Verbindung abgedichtet wird.

9. Anordnungsverfahren nach Anspruch 8, **dadurch gekennzeichnet, dass** die Dichtheit entweder durch eine Presspassung des Ausgangsanschlusses (5) in dem Rohr (2) des Hydraulikverbinders (1) oder durch Ultraschallschweißen des Ausgangsanschlusses (5) an das Rohr (2) des Hydraulikverbinders (1) erhalten wird.

## Claims

1. Hydraulic connector (1) intended to assemble onto a wiper blade of a vehicle provided with at least one fluid spray manifold along the wiper blade, the hydraulic connector (1) comprising at least one inlet coupling (21) capable of being connected to an inlet of said fluid and at least one tube (2) capable of being connected to a duct delimited by the manifold, the hydraulic connector (1) comprising at least one outlet coupling (5, 13) and a sealing device (10, 15, 15') with the manifold, the sealing device (10, 15, 15') being a constituent part of the outlet coupling (5) attached onto the tube (2), **characterized in that** the outlet coupling (5) attached onto the tube (2) of the hydraulic connector (1) comprises a first upstream cylindrical portion (6) intended to be housed in the tube of the hydraulic connector, a stop (7) and a second downstream cylindrical portion (8) intended to be housed in the duct of the spray manifold and comprising the sealing device (10) consisting of a collar (9) with an outer diameter greater than the outer diameter of the outlet coupling (5).

2. Hydraulic connector (1) according to Claim 1, **characterized in that** the diameter of the stop (7) is greater than the diameters of the first and/or second cylindrical portions (6, 8).

3. Hydraulic connector (1) according to either one of Claims 1 and 2, **characterized in that** the outer diameter of the first cylindrical portion (6) of the outlet coupling (5) is less than the inner diameter of the tube (2) of the connector (1).

4. Hydraulic connector (1) according to any one of Claims 1 to 3, **characterized in that** the free end (12) of the second cylindrical portion (8) is conical in shape.

5. Hydraulic connector (1) according to any one of Claims 1 to 4, **characterized in that** it is compliant with ECE Regulation No. 1008/2010 of 9 November 2010.

6. Wiper blade provided with at least one fluid spray manifold and comprising a hydraulic connector (1) according to any one of Claims 1 to 5 connected to said manifold by its outlet coupling (5, 13).

7. Wiper blade according to Claim 6, **characterized in that** the fluid spray manifold of the wiper blade comprises at least one row of holes which extends along said wiper and through which the fluid is capable of being sprayed onto a glazed surface.

8. Assembly method for a hydraulic connector (1) according to any one of Claims 1 to 5, during which the first portion (6) of the outlet coupling (5) is inserted into the tube (2) of the hydraulic connector (1) and then the connection is sealed.

9. Assembly method according to Claim 8, **characterized in that** the seal is obtained either by force-fitting the outlet coupling (5) into the tube (2) of the hydraulic connector (1) or by ultrasonic welding of the outlet coupling (5) to the tube (2) of the hydraulic connector (1) .
